Europäisches Patentamt

(19) European Patent Office

Office européen des brevets

(11) Publication number: **0 057 730**
**B2**

(12) **NEW EUROPEAN PATENT SPECIFICATION**

(45) Date of publication of the new patent specification: **19.09.90**

(51) Int. Cl.⁵: **H 02 K 16/00, H 02 K 19/16**

(21) Application number: **81902369.8**

(22) Date of filing: **19.08.81**

(86) International application number:
**PCT/JP81/00180**

(87) International publication number:
**WO 82/00737 04.03.82 Gazette 82/07**

(54) **ELECTRIC GENERATOR.**

(30) Priority: **19.08.80 JP 117973/80**

(43) Date of publication of application:
**18.08.82 Bulletin 82/33**

(45) Publication of the grant of the patent:
**23.01.85 Bulletin 85/04**

(45) Mention of the opposition decision:
**19.09.90 Bulletin 90/38**

(84) Designated Contracting States:
**FR**

(56) References cited:
**CH-A- 468 110**
**DE-C- 555 835**
**GB-A-1 173 198**
**GB-A-2 025 708**
**JP-B-49 001 724**
**JP-U-55 037 585**
**US-A-3 668 419**

**Bosch Technische Unterrichtung
"Drehstromgeneratoren für
Kraftfahrzeuge", VDT-VBE 315/30, Dec. 1970,
pp.7,18,19**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **IKEGAMI, Takashi Mitsubishi Denki Kabushiki Kaisha**
**Himeji Seisakusho, 840, Chiyoda-cho**
**Himeji-shi Hyogo 670 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

This invention relates to a charging generator comprising a first rotor fixedly mounted on a rotary shaft, said first rotor having a first field winding which is excited through a pair of slip rings and a pair of brushes; a second rotor fixedly mounted on said rotary shaft in such a manner that said second rotor is adjacent to said first rotor; a first stator arranged around the outer wall of said first rotor at a small gap therefrom, said first stator having a first winding; a rectifier device connected to said first winding of said first stator; a DC output terminal connected to said rectifier device; a second field winding for said second rotor; a second stator arranged around the outer wall of said second rotor, said second stator having a second winding; an AC output terminal connected to said second winding; switch means for selectively closing or opening a current supply path to said second field winding; and regulator means for regulating voltage at said DC output terminal.

Such a generator is known from US Patent 3 668 419.

This known generator is able to provide a regulated DC output and an unregulated AC output but at the expense of mechanical and electrical complexity. Both rotors are provided with field windings which accordingly must both be supplied via brushes and slip rings. The generator is therefore relatively bulky.

A generator of inductor type is known from GB—A—2 025 708. This generator of course requires no brushes or slip rings. However, such generators have starting problems which are solved in GB—A—2 025 708 by the provision of specially magnetically hardened parts in the magnetic circuit. This however leads to a relatively complex structure which is rather expensive to manufacture. Other methods of solution involve additional external circuitry.

An object of the invention is to provide an improved generator having two rotors for providing AC and DC outputs which is more compact and less complex mechanically and accordingly less expensive to manufacture.

According to the invention, the charging generator defined in the first paragraph of this specification is characterised in that: said second rotor is an inductor type rotor and has no brush or slip ring; the second field winding is secured to a bracket and positioned around an inner wall of said inductor type rotor at a small gap therefrom; the number of turns of said second winding is larger than that of said first winding; and said current supply path passes from said DC output terminal to said second field winding. Preferably, an auxiliary rectifier device is connected between said first winding and said first field winding, and said regulator means is arranged to control current flow from said auxiliary rectifier device to said first field winding.

Being designed as described above, the charging generator of the invention has the following effects:

(1) Similarly as in a conventional charging generator, the charging generator of the invention can supply DC power to batteries, DC motors, lamps, etc. Furthermore, the charging generator can supply high voltage AC power to AC window defrosters, high voltage lamps, etc., which may be installed on vehicles in future.

(2) When a single-phase outlet is installed at a suitable position on a vehicle or the like and the speed of the charging generator is set to a suitable value, then 100V AC can be maintained across the lines connected to the single-phase receptacle. Therefore, the charging generator can supply AC power to electrical devices of 100V AC such as an electrical pot, an electrical oven, an electrical cooking device, and an electrical soldering iron.

(3) As the inductor type rotor is provided on the AC output side, the provision of further slip rings and brushes is unnecessary, and the axial dimension can be made smaller than that of a system in which two ordinary rotors are juxtaposed in the axial direction.

(4) If a bracket is so formed that the charging generator can be installed in the same way as a conventional charging generator on the engine of a vehicle or the like, then the conventional charging generator can be readily replaced by the charging generator of the invention, and therefore it is unnecessary to modify the engine.

For a better understanding of the invention, and to show how the same may be carried into effect, reference will now be made, by way of example, to the accompanying drawings, in which:

Figure 1 is a sectional view showing the arrangement of a conventional charging generator;

Figure 2 is an electrical wiring diagram showing the conventional charging generator installed on a vehicle or the like;

Figure 3 is a sectional view showing a charging generator which is one embodiment of this invention; and

Figure 4 is an electrical wiring diagram showing the charging generator according to the invention which is installed on a vehicle or the like.

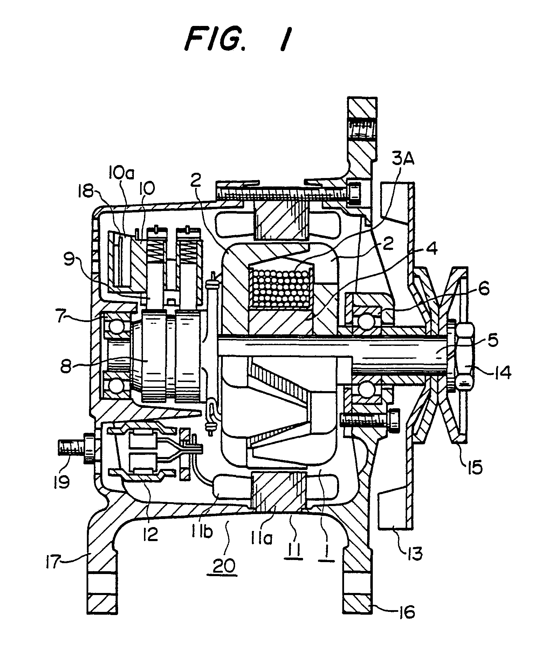

Figure 1 is a sectional view of a normal charging generator. In Figure 1, reference numeral 1 designates a rotor which comprises confronted magnetic poles 2, namely, N and S poles arranged alternately and circumferentially, a field winding 3A for magnetizing the confronted magnetic poles 2, and a field core 4 which is arranged inside of the field winding 3A and on which the field winding 3A is wound. Reference numeral 5 designates a rotary shaft on which the rotor 1 is fixedly mounted. The rotary shaft 5 is supported by bearings 6 and 7 at both ends. Reference numeral 8 designates a pair of slip rings which are fixed to the rotary shaft 5 and are connected to the field winding 3A. Reference numeral 9 designates a pair of brushes which are slidably in contact with the pair of slip rings 8; 10, a brush holder for holding the pair of brushes 9; and 11, a stator which comprises an armature core 11a which is confronted through a small gap with the confronted magnetic poles 2, and an armature winding 11b which is wound on the armature core 11a in three-phase and star connection. Reference numeral 12 designates a rectifier device for subjecting an AC output generated in the armature winding 11b to full-wave rectification; 13, a fan which together with a pulley 15 is fixedly secured to the rotary shaft 5 with a nut 14; 16, a front bracket which supports the above-described bearing 6 and one end portion of the above-described stator 11; 17, a rear bracket on which the above-described bearing 7, the other end portion of the stator 11, the brush holder 10 and the rectifier device 12 are mounted; 18, a voltage regulator accommodated in a box 10a which is integral with the brush holder 10 and is provided on the back of the brush holder 10; 19, a DC output connected to the rectifier device 12; and 20, a charging generator which is composed by the above-described components.

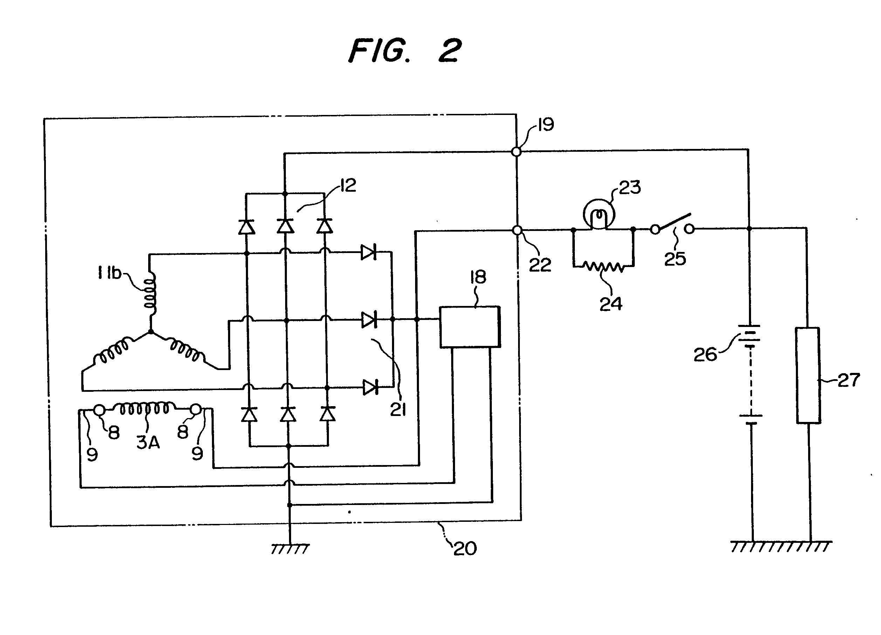

When the charging generator 20 thus constructed is installed on a vehicle, the electrical wiring is as shown in FIG. 2. In FIG. 2, reference numeral 21 designates an auxiliary rectifier device for supplying an exciting current to the field winding 3A; 22, an initial exciting terminal through which an initial exciting current flows; 23, a charging indication lamp; 24, an initial exciting resistor connected in parallel to the charging indication lamp 23; 25, a key switch; 26, a battery; and 27, a DC load such as a DC motor or a lamp.

The operation of the charging generator thus arranged will be described.

When the key switch 25 is closed, an exciting current is supplied from the battery 26 through the charging indication lamp 23 and the initial exciting resistor 24 to the field winding 3A. In this operation, the charging indication lamp 23 is turned on to indicate a non-charging state, i.e., the fact that the exciting current is being supplied to the field winding 3A from the battery 26. On the other hand, when the engine of the vehicle (not shown) is started, the rotor 1 is driven through the pulley 15 by the belt. Therefore, a rotating magnetic field is developed, and a predetermined AC output is developed in the armature winding 11b. The AC output is converted into a DC output by being subjected to full-wave rectification in the rectifier device 12. When the speed of the engine is increased to raise the voltage at the initial exciting terminal 22 to the voltage of the battery 26, no current flows in the charging indication lamp 23 and the initial exciting resistor 24. Thus, the charging indication lamp 23 indicates the fact that the charging generator 20 has been excited. Thereafter, the exciting current is supplied through the auxiliary rectifier device 21 from the armature winding 11b. When the speed of the engine is further increased, the DC output is supplied through the DC output terminal to the battery 26 on the vehicle and to the DC load such as a DC motor or a lamp. The voltage regulator 18 operates to maintain the voltage at the DC output terminal 19 at a predetermined value by turning on and off the exciting current which is supplied to the field winding 3.

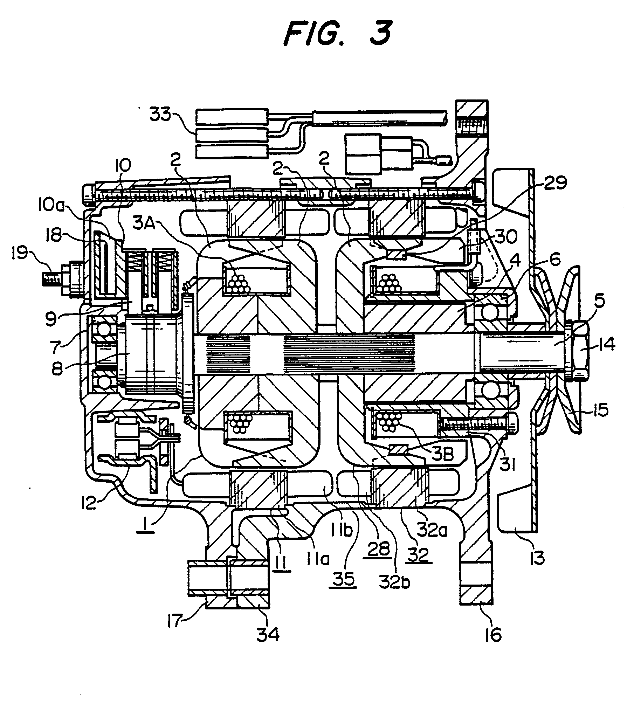

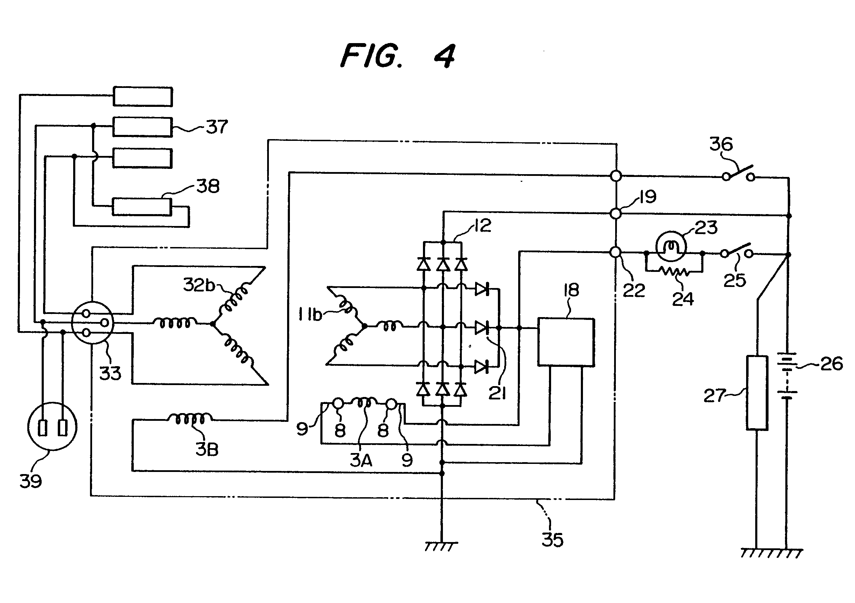

One embodiment of the present invention will be described with reference to Figures 3 and 4, in which parts similar to those of Figures 1 and 2 have the same reference numerals.

Figure 3 is a sectional view of a charging generator according to the invention. In Figure 3, reference numeral 28 designates an inductor type rotor which is fixedly mounted on a rotary shaft 5 in such a manner that the inductor type rotor 28 and a rotor 1 are juxtaposed. The inductor type rotor 28 comprises confronted magnetic poles 2, a magnetic insulating ring 29, confronted magnetic pole rings 30 and a field core 4. Reference numeral 31 designates a field winding frame on which a second field winding 3B is wound. The field winding frame 31 is provided around the inner wall of the inductor type rotor 28 with a small gap therebetween. Reference numeral 32 designates a second stator which is provided around the outer wall of the inductor type rotor 28 with a small gap therebetween. The second stator 32 is made up of a second armature core 32a and a second armature winding 32b which is wound on the core 32a in three-phase and star connection. Reference numeral 33 designates a three-phase AC output terminal connected to the second armature winding 32b; 34, an intermediate bracket provided between the first and second stators 11 and 32; and 35, a charging generator which is made up of the above-described components. The number of turns of the second armature winding 32b is much larger than that of the first armature winding 11b, to sufficiently raise the voltage.

When the above-described charging generator is installed on a vehicle or the like, the electrical wiring is as shown in FIG. 4. In FIG. 4, reference numeral 36 designates a normally opened contact means; 37, a three-phase AC load such as a three-phase AC window defroster; 38, a single-phase AC load such as a high voltage lamp; and 39, a single-phase AC receptacle provided at a suitable position on a vehicle or the like.

The operation of the charging generator thus arranged will be described.

When the key switch 25 is closed, the battery 26 supplies an exciting current through the charging indication lamp 23 and the initial exciting resistor 24 and through the initial exciting terminal 22, the brushes 9 and the slip rings 8 to the first field winding 3A. In this operation, the charging indication lamp is turned on, thus indicating the non-charging state, i.e., the fact that the exciting current is supplied to the field winding 3A from the battery 26. On the other hand, when the engine of the vehicle (not shown) is started, the rotary shaft 5 is turned. As a result, a rotating magnetic field is developed, and a predetermined AC output is developed in the first armature winding 11b. The AC output is applied to the DC output terminal 19 after being subjected to full-wave rectification in the rectifier device 12.

When the speed of the engine is increased until the voltage at the initial exciting terminal 22 becomes equal to the voltage of the battery 26, the current to the charging indication lamp 23 and the initial exciting resistor 24 is interrupted; that is, the charging indication lamp 23 is turned off, thus indicating the fact that the charging generator 35 has been excited. Thereafter, the exciting current to the first field winding 3A is supplied through the auxiliary rectifier device 21 from the first armature winding 11b. A DC power is supplied through the DC output terminal 19 to the battery 26 and the DC load 27. The voltage regulator 18 operates to maintain the voltage of the DC output terminal 19 at a predetermined value by intermittently controlling the exciting current which is supplied to the first field winding 3A.

When the normally opened contact means 36 is closed, an exciting current is supplied through the normally opened contact means 36 to the second field winding 3B. In this operation, the rotary shaft 5 is maintained rotated as described above, and therefore the inductor type rotor 28 develops a rotating magnetic field and a predetermined AC output is developed in the second armature winding 32b. The AC output is applied through the three-phase AC output terminal 33 to the three-phase AC load or the single-phase AC load 38. The voltage across the lines connected to the single-phase AC receptacle can be set to 100V AC by suitably controlling the speed of rotation of the rotary shaft. Therefore, the AC power can be supplied to electrical equipment of 100V AC such as an electrical pot, an electrical oven, an electrical cooking device or an electrical soldering iron.

As is apparent from the above description, in the embodiment of the invention, the inductor type rotor, and the field winding and the second stator are so arranged that the small gaps are provided between the field winding and the inner wall of the rotor and between the second stator and the outer wall of the rotor, respectively, and they are juxtaposed with the components of the conventional DC power supplying generator. Therefore, the compact charging generator can supply AC power.

In the above-described embodiment, the voltage regulator 18 is built in the charging generator 35; however the same effects can be obtained even in the case where the voltage regulator 18 is provided separately. In the above-described embodiment, both of the first and second armature windings 11b and 32b are of three-phase and star connection; however, the number of phases and the connection type may be selected as desired. Furthermore in the above-described embodiment, the number of poles is not described for the rotor 1 and the inductor type rotor 28, which means that any suitable number of poles may be selected as desired.

## Claims

1. A charging generator comprising: a first rotor (1) fixedly mounted on a rotary shaft (5), said first rotor having a first field winding (3A) which is excited through a pair of slip rings (8) and a pair of brushes (9); a second rotor (28) fixedly mounted on said rotary shaft (5) in such a manner that said second rotor (28) is adjacent to said first rotor (1); a first stator (11) arranged around the outer wall of said first rotor at a small gap therefrom, said first stator having a first winding (11b); a rectifier device (12) connected to said first winding of said first stator; a DC output terminal (19) connected to said rectifier device; a second field winding (3B) for said second rotor (28); a second stator (32) arranged around the outer wall of said second rotor (28), said second stator having a second winding (32b); an AC output terminal (33) connected to said second winding (32b); switch means (36) for selectively closing or opening a current supply path to said second field winding (3B); and regulator means (18) for regulating voltage at said DC output terminal, characterised in that: said second rotor is an inductor type rotor (28) and has no brush or slip ring; the second field winding (3B) is secured to a bracket (16) and positioned around an inner wall of said inductor type rotor at a small gap therefrom; the number of turns of said second winding (32b) is larger than that of said first winding (11b); and said current supply path passes from said DC output terminal (19) to said second field winding (3B).

2. A generator according to claim 1 wherein an auxiliary rectifier device (21) is connected between said first winding (11b) and said first field winding (3A); and said regulator means (18) is arranged to control current flow from said auxiliary rectifier device (21) to said first field winding (3A).

## Patentansprüche

1. Ladegenerator, umfassend: einen ersten fest auf einer Welle (5) montierten Rotor (1) mit einer ersten Feldwicklung (3A), die über ein Paar von Schleifringen (8) und ein Paar von Bürsten (9) gespeist wird; einen zweiten Rotor (28), der derart fest auf der Welle (5) sitzt, daß er dem ersten Rotor (1) benachbart ist; einen ersten Stator (11), der mit engem Luftspalt die äußere Wand des ersten Rotors (1) umgibt und eine erste Wicklung (11b) trägt; eine mit der ersten Wicklung des ersten Stators verbundene Gleichrichtereinrichtung (12), eine mit der Gleichrichtereinrichtung verbundene Gleichstromausgangsklemme (19); eine zweite Feldwicklung (3B) für den zweiten Rotor (28); einen zweiten Stator (32), der den zweiten Rotor (28) umgibt und eine zweite Wicklung (32b) trägt; eine mit der zweiten Wicklung (32b) verbundene Wechselstromausgangsklemme (33); Schaltmittel (36) zum selektiven Schließen oder Öffnen eines Stromversorgungsweges zu der zweiten Feldwicklung (3B); und Reglermittel (18) zum Regeln der Spannung an der Gleichstromausgangsklemme, dadurch gekennzeichnet, daß der zweite Rotor ein induktorartiger Rotor (28) ist und weder Bürsten noch Schleifringe besitzt; die zweite Feldwicklung (3B) an einem Gehäuseteil (16) befestigt und um eine innere Wand des induktorartigen Rotors mit einem engen Luftspalt von diesem angeordnet ist; die Windungszahl der zweiten Wicklung (32b) größer als die der ersten Wicklung (11b) ist, und der Stromversorgungsweg von der Gleichstromausgangsklemme (19) zu der zweiten Feldwicklung (3B) läuft.

2. Ladegenerator nach Anspruch 1, dadurch gekennzeichnet, daß eine Hilfsgleichrichtereinrichtung (21) zwischen die erste Wicklung (11b) und die erste Feldwicklung (3A) geschaltet ist; und die Reglermittel (8) angeordnet sind, um Stromfluß von der Hilfsgleichrichtereinrichtung (21) zu der ersten Feldwicklung (3A) zu steuern.

## Revendications

1. Générateur électrique comprenant: un premier rotor (1) monté de manière fixe sur un arbre tournant (5), ledit premier rotor ayant un premier bobinage d'excitation (3A) recevant un courant d'excitation transmis par une paire de bagues collectrices (8) et une paire de balais (9); un second rotor (28) monté de manière fixe sur ledit arbre tournant (5) de façon telle que ledit second rotor (28) est adjacent audit premier rotor (1); un premier stator (11) disposé autour de la paroi extérieure dudit premier rotor à une petite distance de celui-ci, ledit premier stator ayant un premier bobinage (11b); un redresseur (12) connecté audit premier bobinage dudit premier stator; une borne de sortie à courant continu (19) connectée audit redresseur; un second bobinage d'excitation (3B) pour ledit second rotor (28); un second stator (32) disposé autour de la paroi extérieure dudit second rotor (28), ledit second stator ayant un second bobinage (32b); une borne de sortie à courant alternatif (33) connectée audit second bobinage (32b); des interrupteurs (36) permettant de fermer ou d'ouvrir à souhait un trajet de courant d'alimentation vers ledit second bobinage d'excitation (3B); et un moyen de réglage (18) pour la régulation de la tension à ladite borne de sortie à courant continu, caractérisé en ce que: ledit second rotor est un rotor à induction (28) et n'est muni ni de balai ni de bague collectrice; le second bobinage d'excitation (3B) est fixé à un support (16) et placé autour d'une paroi intérieure dudit rotor à induction à une petite distance de celui-ci; le nombre de spires dudit second bobinage (32b) est supérieur à celui dudit premier bobinage (11b); et ledit trajet de courant d'alimentation va de ladite borne de sortie à courant continu (19) audit second bobinage d'excitation (3B).

2. Générateur selon la revendication 1, dans lequel un redresseur auxiliaire (21) est connecté entre ledit premier bobinage (11b) et ledit premier bobinage d'excitation (3A); et ledit moyen de réglage (18) est disposé pour commander l'écoulement du courant depuis ledit redresseur auxiliaire (21) audit premier bobinage d'excitation (3A).

EP 0 057 730 B2

# FIG. 1

# FIG. 2

# FIG. 3

FIG. 4